# EUROPEAN PATENT SPECIFICATION

(11) **EP 4 445 189 B1**
(45) Date of publication and mention of the grant of the patent: **16.09.2026**
(21) Application number: 22830241.0
(22) Date of filing: 05.12.2022
(51) Int. Cl.: G02B 5/18, G02B 27/00, G02B 27/01

(54) **OPTICAL ASSEMBLY FOR AUGMENTED REALITY OR VIRTUAL REALITY DISPLAY**
OPTISCHE ANORDNUNG FÜR ANZEIGE DER ERWEITERTEN REALITÄT ODER VIRTUELLEN REALITÄT
ENSEMBLE OPTIQUE POUR AFFICHAGE DE RÉALITÉ AUGMENTÉE OU DE RÉALITÉ VIRTUELLE

(30) Priority: 10.12.2021 EP 21213613
(43) Date of publication of application: 16.10.2024
(73) Proprietor: Snap Inc., Santa Monica, California 90405 (US)
(72) Inventor: CRAI, Alexandra, Abingdon Oxfordshire OX14 4SR (GB); PHELAN, Ciaran Padraic, Abingdon Oxfordshire OX14 4SR (GB); SOL, Christian William Olavi, Abingdon Oxfordshire OX14 4SR (GB); POUSSIN, David Louis Maxime, Abingdon Oxfordshire OX14 4SR (GB); VALERA, Mohmed Salim, Abingdon Oxfordshire OX14 4SR (GB); WANG, Kai, Abingdon Oxfordshire OX14 4SR (GB); SMITH, Alison Laura, Abingdon Oxfordshire OX14 4SR (GB); JIA, Simeng, Abingdon Oxfordshire OX14 4SR (GB)
(74) Representative: Mathys & Squire
(86) International application number: PCT/EP2022/084439
(87) International publication number: WO 2023/104725

(56) References cited:
- GB-A- 2 587 709
- US-A1- 2016 327 789
- US-A1- 2021 382 308

## Description

The present invention relates to an optical assembly for use in an augmented reality or virtual reality display such as a headset or a head-up display. In particular, the invention relates to an optical assembly that can improve optical efficiency and can improve the uniformity of brightness in a two-dimensional output.

An augmented reality display allows a user to view their surroundings as well as projected images. In military or transportation applications the projected images can be overlaid on the real world perceived by the user. Other applications for these displays include video games and wearable devices, such as glasses. By contrast, in a virtual reality display a user can only perceive projected images and light from their real world surroundings is obscured.

In a normal augmented reality set-up a transparent display screen is provided in front of a user so that they can continue to see the physical world. The display screen is typically a glass waveguide, and a projector is provided to one side. Light from the projector is coupled into the waveguide by a diffraction grating (an input grating). The projected light is totally internally reflected within the waveguide. The light is then coupled out of the waveguide by another diffraction grating (an output grating) so that it can be viewed by a user. The projector can provide information and/or images that augment a user's view of the physical world.

An optical device is disclosed in WO 2016/020643 for expanding input light in two dimensions in an augmented reality display. An input diffractive optical element is provided for coupling input light from a projector into a waveguide. The optical device also includes an output element having two diffractive optical elements overlaid on one another on or in the waveguide so that each of the two diffractive optical elements can receive light from the input diffractive optical element and couple it towards the other diffractive optical element in the pair, which can then act as an output diffractive optical element which couples light out of the waveguide towards a viewer. In one embodiment the two diffractive optical elements overlaid on one another are provided in a photonic crystal. This is achieved by having an array of pillars arranged within or on the surfaces of the waveguide, having a similar or closely matched refractive index relative to the surrounding waveguide medium.

Another optical device is disclosed in WO 2020/084275. In this arrangement an output element is composed of overlaid first and second diffraction gratings with different diffraction efficiencies for a given wavelength. This can be achieved by superimposing a first diffraction grating and a second diffraction grating, which have unequal diffraction efficiencies, to provide a crossed grating. An output element can be split into two halves which provide equal and opposite diffractive interactions to promote the outcoupling of light towards a viewer.

Other relevant documents include GB 2587709, US 2021/382308 and US 2016/327789. It has been found that output elements of the kind disclosed in WO 2020/084275 are very effective at expanding light in two dimensions within a waveguide. Without suitable control mechanisms the two-dimensional expansion may be so effective that there can be a relative absence of light in a central portion of the output element. This can produce some dark banding along a central strip of the output element where the output luminosity is slightly lower than in other regions. By contrast, the output elements of the kind disclosed in WO 2016/020643 can produce a strong straight-to-eye order, which is light that is directly coupled out of the waveguide and towards a viewer's eye. Without any correction this can produce a relatively bright central strip within the output element where the output luminosity is slightly higher than in other regions. One object of the present invention is to address and mitigate these effects. Another object of the present invention is to improve optical efficiency within a waveguide. Improving optical efficiency can advantageously prolong battery life within a consumer device, or can facilitate use of the device with lower power light engines. From an alternative perspective, an improved optical efficiency can enable higher brightness augmented reality images, which may be particularly useful in bright external lighting conditions.

According to an aspect of the present invention there is provided an optical assembly as defined in claim 1.

In this way, it has been found that a more even illumination can be provided from the output diffractive optical structure. In particular, the prominence of any dark central banding can be reduced along a dividing line between the first and second portions. This can be achieved by using two pupils from the at least one projector and positioning them respectively at off-centre positions so that they are received respectively at the first and second portions.

In another configuration, not within the scope of the claims, the at least one projector may be configured to provide a pupil with a physical size that is longer in a dimension that is perpendicular to the first direction than in a dimension that is parallel to the first dimension. For example, the single pupil may be elliptical with the minor axis of the ellipse oriented parallel to the first direction, and the major axis oriented in a perpendicular direction. Other pupil shapes could be provided as well, such as rectangular shapes. These stretched pupils may be received respectively in the first and second portions, bridging the dividing line between the first and second portions. This configuration can also improve the evenness of illumination, when compared to a conventional circular pupil that is received along the dividing line.

There is a dividing line between the first and second portions of the output diffractive optical structure. Preferably, the centre of the first pupil is received at the first portion at a first distance from the dividing line and the second pupil is received at the second portion at a second distance from the dividing line, wherein the first and second distance are substantially equal to one another. In this way, the first and second pupils can be received symmetrically either side of the dividing line. This can provide a desirable balance in optical effects in the first and second portions to improve the evenness of illumination for a viewer, and to improve the symmetry of the output.

The first pupil has a first cone angle when coupled toward the output diffractive optical structure by the input diffractive optical structure, wherein the cone angle extends only in the first portion and does not intersect the dividing line. The second pupil has a second cone angle when coupled toward the output diffractive optical structure by the input diffractive optical structure, wherein the second cone angle extends only in the second portion and does not intersect the dividing line. In this way, the first and second pupils can be provided with sufficiently small fields of view that each will only illuminate the first and second portions respectively. This can mitigate artefacts that might otherwise occur from an intersection of light with the dividing line. These artefacts may include undesirable scattering. Preferably there is a separation of at least 0.1mm between the two fields of view from the projector or projectors to avoid alignment issues.

The two input pupils from the projector may be partially overlapping with one another. Where the input pupils are circular in shape, this can create a combined input pupil that has a substantially elliptical cross-sectional shape having a minor axis that is parallel with the first direction. This can increase the size of the pupil in a lateral direction that is perpendicular to the first direction, without increasing the size of the pupil in the first direction since this could cause undesirable re-interaction with the input grating.

The two input pupils from the projector may be non-overlapping with one another. It has been found that non-overlapping input pupils can provide improved evenness of luminance from the output diffractive optical structure. This kind of illumination can also advantageously avoid the projection of light onto the dividing line, which can cause undesirable artefacts. Particularly desirable illumination properties can be provided by separating the input pupils by at least 5mm or at least 7mm.

There may be a single projector configured to generate the two input pupils. Alternatively, there may be two projectors, where each projector generates one of the input pupils.

The first diffractive optical element may be blazed. This can advantageously improve the efficiency with which light is coupled out of the waveguide towards a user. This can also reduce the amount of light that is coupled out of the waveguide away from the user, which can improve aesthetics in use, and can improve security by decreasing the possibility that augmented reality light can be detected externally. In one configuration the first diffractive optical element may have a stepped profile.

According to another aspect of the invention there is provided a method of operating an optical assembly in an augmented reality or virtual reality display as defined by claim 8.

According to another aspect of the present disclosure there is provided an optical structure for use in an augmented reality or virtual reality display, comprising: a waveguide; an input diffractive optical structure configured to receive light from a projector and couple the received light into the waveguide; and a first output diffractive optical structure and a second output diffractive optical structure positioned respectively in first and second planes in or on the waveguide, wherein the first and second output diffractive optical structures are respectively configured to receive light from the input diffractive optical element in an input direction, wherein the first and second output diffractive optical structures respectively comprise at least a first diffractive optical element and a second diffractive optical element with different respective diffraction efficiencies, wherein the first diffractive optical element has a relatively high diffraction efficiency and the second diffractive optical element has a relatively low diffraction efficiency and the first and second diffractive optical elements are overlaid on one another in the first and second planes, wherein the first diffractive optical element is configured to receive light along the input direction and couple it towards the second diffractive optical element which can then act as an output diffractive optical element, providing outcoupled orders towards a viewer, and wherein the second diffractive optical element is configured to receive light along the input direction and couple it towards the first diffractive optical element which can then act as an output diffractive optical element, providing outcoupled orders towards a viewer, wherein in the first output diffractive optical structure the first diffractive optical element is configured to couple light from the input direction in a first direction and the second diffractive optical element is configured to couple light from the input direction in a second direction, and in the second output diffractive optical structure the first diffractive optical element is configured to couple light from the input direction in a second direction and the second diffractive optical element is configured to couple light from the input direction in a first direction.

It has been found that this configuration can advantageously improve the evenness with which light is coupled out of the waveguide across two dimensions. Specifically, this can improve the relative brightness from a central band which is aligned with the first direction in which light is received from the input grating. Although the straight-to-eye order for each of these gratings is still low, the first and second output diffractive optical structures overlap along the central region and have close proximity to each other: a ray turned by one grating does not have to travel far before encountering the second grating and being partially diffracted to the user.

Preferably the first output diffractive optical structure and the second output diffractive optical structure are overlapping when viewed in a direction that is normal to the plane of the waveguide. This can improve the symmetry of the device because the diffractive properties of the structure are symmetrical in the overlap region.

In another configuration the first output diffractive optical structure and the second output diffractive optical structure are partially overlapping, when viewed in a direction that is normal to the plane of the waveguide, wherein light from the input grating is received at a region of overlap. The first output diffractive optical structure may have a region that is overlapping with the second output diffractive optical structure, and a region that is non-overlapping with the second output diffractive optical structure, wherein in the non-overlapping region the first diffractive optical element is configured to couple light from the input direction towards the overlapping region, and the second diffractive optical element is configured to couple light from the input direction away from the overlapping region. In this way, the optical structure tends to direct light back towards the central band, which is the overlapping region. Since the first and second output diffractive optical structures overlap along the central region and have close proximity to each other, a ray turned by one grating does not have to travel far before encountering the second grating and being partially diffracted to the user. This arrangement helps improve the light output in the central region of the angular image emanating from the waveguide.

In the same way, the second output diffractive optical structure preferably has a region that is overlapping with the first output diffractive optical structure, and a region that is non-overlapping with the first output diffractive optical structure. In the non-overlapping region the first diffractive optical element is preferably configured to couple light from the input direction towards the overlapping region, and the second diffractive optical element is configured to couple light from the input direction away from the overlapping region. This provides a symmetrical arrangement where light in non-overlapping regions is directed back towards the central band to improve illumination in the central area.

The first diffractive optical element may be blazed. The first diffractive optical element is predominantly responsible both for turning orders of light within the waveguide and for coupling light out of the waveguide. This is because the first diffractive optical element has a relatively higher diffraction efficiency. By providing a blazed profile the first diffractive optical element can preferentially couple light into a positive or negative order. This can promote the coupling of light out of the waveguide and towards a viewer's eyes, rather than the coupling of light out of the waveguide in an opposite direction where it cannot be seen by the viewer. This improves optical efficiency by channelling light more effectively towards the intended viewer. It also improves security by decreasing the brightness of light that is coupled away from the viewer. The first diffractive optical element may have a stepped profile having surface relief elements with different step heights.

Preferably the first output diffractive optical structure is provided on a surface of the waveguide. Generally this is preferred because it can be produced with fewer manufacturing steps. The second output diffractive optical structure may also be provided on a surface of the waveguide (i.e. the opposing surface to the first output diffractive optical structure). In an alternative configuration the first and second output diffractive optical structures may be positioned respectively in first and second planes that are provided internally within the waveguide. This configuration is presently considered to be more complex to manufacture, but has advantages in terms of hermetically sealing the gratings from the external environment surrounding the waveguide.

According to another aspect of the present disclosure there is provided an optical structure for use in an augmented reality or virtual reality display, comprising: one or more waveguides; at least one input diffractive optical element configured to couple input light into the one or more waveguides; and a first output diffractive optical structure and a second output diffractive optical structure positioned respectively in first and second planes on or in the one or more waveguides, wherein the first output diffractive optical structure comprises a plurality of optical elements in a photonic crystal arranged in an array to provide two diffractive optical elements overlaid on one another, wherein each of the two diffractive optical elements is configured to receive light from the input diffractive optical element and couple it towards the other diffractive optical element which can then act as an output diffractive optical element providing outcoupled orders towards a viewer, wherein the second output diffractive optical structure comprises first and second linear diffractive optical elements overlaid on one another, wherein each of the first and second linear diffractive optical elements is configured to receive light from the input diffractive optical element and couple it towards the other diffractive optical element which can then act as an output diffractive optical element providing outcoupled orders towards a viewer.

It has been found that this arrangement can take advantage of the respective desirable properties of a photonic crystal and linear diffractive optical elements. It has been found that a photonic crystal on its own can create a relatively bright central band due to a strong straight to eye order. On the other hand, linear diffractive optical elements can create a relatively dark central band due to a weak (or no) straight to eye order. These effects can balance one another to provide more even illumination for a viewer.

Preferably the optical structure comprises first and second waveguides having respective input diffractive optical elements, wherein the first output diffractive optical structure is provided in a first plane on or in the first waveguide and the second output diffractive optical structure is provided in a second plane on or in the second waveguide. In this way, a stacked waveguide configuration can be provided. The waveguides may be attached to one another. This may be accomplished using an adhesive such as tape or glue. An air gap is preferably provided between the first and second waveguides so that they can be optically separated from one another.

The first output diffractive optical structure and the second output diffractive optical structure may be positioned respectively in first and second planes on or in the same waveguide. This can provide all of the desirable effects in terms of improved illumination in a single waveguide assembly.

The two diffractive optical elements overlaid on one another in the photonic crystal array are preferably respectively parallel to the first and second linear diffractive optical elements in the second output diffractive optical structure. This can facilitate interaction between the diffractive elements so that they can cooperate to expand light within the waveguide and to couple it outwards and towards a viewer.

In one configuration the second output diffractive optical structure comprises at least a first diffractive optical element and a second diffractive optical element with different respective diffraction efficiencies, wherein the first diffractive optical element has a relatively high diffraction efficiency and the second diffractive optical element has a relatively low diffraction efficiency and the first and second diffractive optical elements are overlaid on one another in or on the waveguide, wherein the first diffractive optical element is configured to receive light along the input direction and couple it towards the second diffractive optical element which can then act as an output diffractive optical element, providing outcoupled orders towards a viewer, and wherein the second diffractive optical element is configured to receive light along the input direction and couple it towards the first diffractive optical element which can then act as an output diffractive optical element, providing outcoupled orders towards a viewer. The output diffractive optical structure may comprise a first portion and a second portion, wherein in the first portion the first diffractive optical element is configured to couple light from the input direction towards the second portion and wherein the second diffractive optical element is configured to couple light from the input direction away from the second portion, and in the second portion the first diffractive optical element is configured to couple light from the input direction towards the first portion and wherein the second diffractive optical element is configured to couple light from the input direction away from the first portion.

The first diffractive optical element may be blazed, and may be provided with a stepped profile having surface relief elements with different step heights.

According to another aspect of the present disclosure there is provided an optical assembly for use in an augmented reality or virtual reality display, comprising: at least one waveguide; one or more input diffractive optical structures configured to receive light from at least one projector and couple the received light into the at least one waveguide; and a first output diffractive optical structure positioned in a first plane of the at least one waveguide configured to receive light from the one or more input diffractive optical elements in an input direction, wherein the first output diffractive optical structure comprises at least a first diffractive optical element and a second diffractive optical element with different respective diffraction efficiencies, wherein the first diffractive optical element has a relatively high diffraction efficiency and the second diffractive optical element has a relatively low diffraction efficiency and the first and second diffractive optical elements are overlaid on one another in the first plane, wherein the first diffractive optical element is configured to receive light along the input direction and couple it towards the second diffractive optical element which can then act as an output diffractive optical element, providing outcoupled orders towards a viewer, and wherein the second diffractive optical element is configured to receive light along the input direction and couple it towards the first diffractive optical element which can then act as an output diffractive optical element, providing outcoupled orders towards a viewer; wherein the first output diffractive optical structure comprises a first portion and a second portion separated by a first dividing line, wherein in the first portion the first diffractive optical element is configured to couple light from the input direction towards the second portion and wherein the second diffractive optical element is configured to couple light from the input direction away from the second portion, and in the second portion the first diffractive optical element is configured to couple light from the input direction towards the first portion and wherein the second diffractive optical element is configured to couple light from the input direction away from the first portion; a second output diffractive optical structure positioned in a second plane of the at least one waveguide configured to receive light from the one or more input diffractive optical elements in the input direction, wherein the second output diffractive optical structure comprises at least a third diffractive optical element and a fourth diffractive optical element with different respective diffraction efficiencies, wherein the third diffractive optical element has a relatively high diffraction efficiency and the fourth diffractive optical element has a relatively low diffraction efficiency and the third and fourth diffractive optical elements are overlaid on one another in the second plane, wherein the third diffractive optical element is configured to receive light along the input direction and couple it towards the fourth diffractive optical element which can then act as an output diffractive optical element, providing outcoupled orders towards a viewer, and wherein the fourth diffractive optical element is configured to receive light along the input direction and couple it towards the third diffractive optical element which can then act as an output diffractive optical element, providing outcoupled orders towards a viewer; wherein the second output diffractive optical structure comprises a third portion and a fourth portion separated by a second dividing line, wherein in the third portion the third diffractive optical element is configured to couple light from the input direction towards the fourth portion and wherein the fourth diffractive optical element is configured to couple light from the input direction away from the fourth portion, and in the fourth portion the third diffractive optical element is configured to couple light from the input direction towards the third portion and wherein the fourth diffractive optical element is configured to couple light from the input direction away from the third portion; wherein the first and second dividing lines are separated from one another in a direction that is perpendicular to the input direction.

In this way, two output diffractive optical structures can be provided having chevron-type patterns which are laterally offset from one another in a direction that is perpendicular to the input direction. This can advantageously improve the evenness of illumination in output light. The two output diffractive optical structures can provide different diffractive properties for the received light, and the effects of the first diffractive optical structure can be balanced by those of the second diffractive optical structure because of the offset. In preferred configurations an input pupil is received at a position that is between the first and second dividing lines. However, other configurations are possible with a plurality of pupils, symmetrically disposed with respect to the first and second dividing lines. In some arrangements the pupils may be positioned so that they are received at positions that are offset from the first and second dividing lines to avoid scattering effects.

The optical assembly may comprise first and second waveguides having respective input diffractive optical elements, wherein the first output diffractive optical structure is provided in a first plane on or in the first waveguide and the second output diffractive optical structure is provided in a second plane on or in the second waveguide. Alternatively, the first output diffractive optical structure and the second output diffractive optical structure may be positioned respectively in first and second planes on or in the same waveguide.

The optical assembly further comprises at least one projector. In an example not falling under the scope of the claimed subject matter, the at least one projector may be configured to provide an input pupil that is received at the first and second output diffractive optical structures along the input direction from the one or more input diffractive optical structures at a position that is between the first and second dividing lines. According to the claimed invention, the at least one projector is configured to provide at least two input pupils of light which are coupled toward the output diffractive optical structure by the input diffractive optical structure substantially in parallel along the input direction at displaced positions from one another so that they are received respectively at an intersection between the first and second portions in the first output diffractive optical structure and at an intersection between the third and fourth portions in the second output diffractive optical structure.

According to another aspect of the present disclosure there is provided a method for operating an augmented reality or virtual reality display as defined above.

Embodiments of the invention are now described, by way of example, with reference to the drawings, in which:
Figure 1 is a schematic plan view of a waveguide for use in an aspect of the present invention;
Figures 2A and 2B are schematic views of the interactions between a light ray and a digital approximation of two crossed gratings for use in an aspect of the present invention;
Figure 3 is a schematic plan view of a waveguide in an embodiment of the invention showing two input pupils of light;
Figure 4 is a schematic plan view of a waveguide in an embodiment not according to the claimed subject matter showing a single elliptical pupil of light;
Figure 5 is a cross-sectional view of the single elliptical pupil of light shown in Figure 4;
Figure 6 is a schematic plan view of a waveguide showing a single elliptical pupil of light;
Figure 7 is a schematic exploded plan view of a waveguide;
Figure 8A is an edge view of the waveguide shown in Figure 7 in a first configuration;
Figure 8B is an edge view of the waveguide shown in Figure 7 in a second configuration;
Figure 9 is a schematic exploded plan view of a waveguide;
Figure 10A is an edge view of the waveguide shown in Figure 9 in a first configuration;
Figure 10B is an end view of the waveguide shown in Figure 10A;
Figure 11A is an edge view of the waveguide shown in Figure 9 in a second configuration;
Figure 11B is an end view of the waveguide shown in Figure 11A;
Figure 12 is a schematic exploded plan view of a waveguide;
Figure 13 is a top view of a portion of a photonic crystal; and
Figure 14 is a schematic plan view of a waveguide.

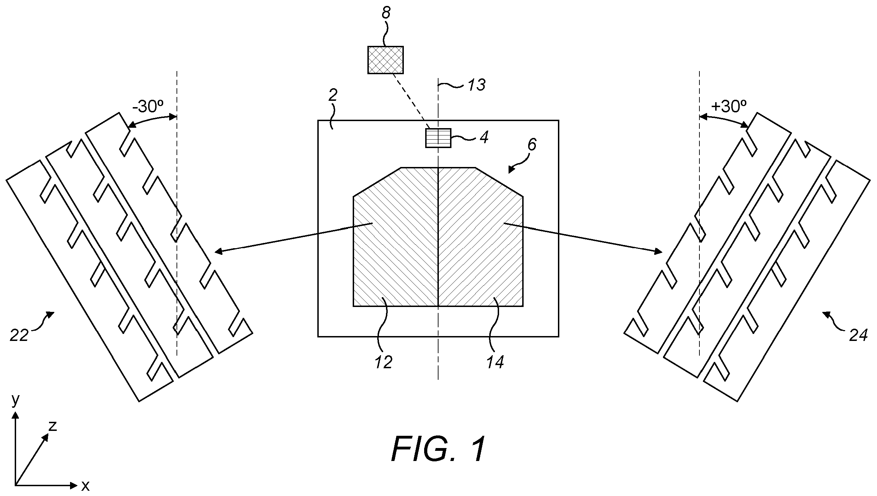

Figure 1 is a schematic plan view of a waveguide 2 in an embodiment of the invention in a Cartesian reference frame. In this example, an input grating 4 is provided for coupling light into the waveguide 2 from a projector 8. The projector 8 emits light that extends towards the input grating 4 on the waveguide 2 in a direction that is parallel to the z-axis. The light diffracted by the input grating 4 is captured within the waveguide 2 and propagates in a direction that is parallel to the y-axis under total internal reflection. A diffractive output element 6 is provided for expanding light in two-dimensions in the x-y plane and coupling it out of the waveguide 2 towards a viewer along the z-axis. In this case, the output element 6 is split in two halves, symmetrically about the direction in which light is coupled towards the output element 6 by the input grating 4. A first portion 12 of the output element 6 is provided on the left hand side and a second portion 14 of the output element 6 is provided on the right hand side, from the perspective of Figure 1 viewed in the plane of the waveguide 2. A dividing line 13 is provided between the first portion 12 and the second portion 14.

The diffractive features in the first portion 12 and the second portion 14 of the output element 6 are different. In the first portion 12, a first digital approximation 22 is provided, which is a digital approximation to a pair of crossed gratings having different diffraction efficiencies. In the second portion 14, a second digital approximation 24 is provided, which is a mirror-image of the first digital approximation 22, reflected about the y-axis.

In these examples, the difference in diffraction efficiencies between the crossed gratings can be provided by adjusting the feature height of the diffractive features in the respective gratings, as would be understood by a person skilled in the art. Alternatively the dimensions of the features that are parallel to the grooves or lines of the diffractive features are selectively controlled. In the first digital approximation 22 a first diffraction grating is provided with grooves that are angled at -30° to the y-axis and a second diffraction grating is represented by "notches" in the first diffraction grating, extending at an angle of +30° to the y-axis. Effectively, this provides a second diffraction grating represented by dashed lines. The reduced overall length of the features provided in the second diffraction grating versus those features in the first diffraction grating, which have a continuous length, can give rise to a difference in diffraction efficiency, even if the same feature height is used. A similar principle can be used in a photonic crystal when controlling the shape of elements within a regular array.

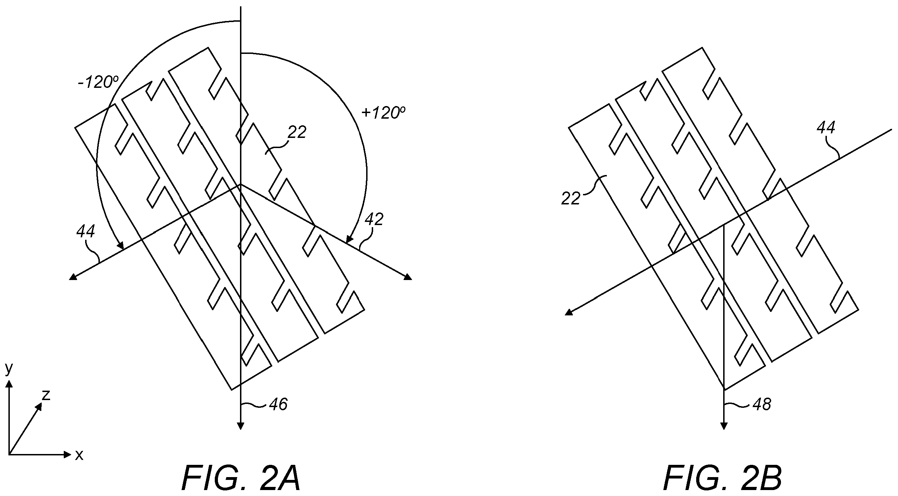

Figures 2A and 2B are schematic views of the interactions between a light ray and the first digital approximation 22. In Figure 2A an incident light beam is provided in a direction that is parallel with the y-axis. The incident light beam is received from the input grating 4, and is totally internally reflected within the waveguide 2. Thus, the input direction of the beam is parallel with the y-axis. Upon interaction with the first digital approximation 22 most of the light will be coupled into one of four orders: a zero order which continues to propagate in a direction that is parallel with the y-axis, one of two "turn" orders which are diffracted respectively by the crossed diffraction gratings within the first digital approximation 22, and a "straight to eye" order which is diffracted out of the waveguide along the z-axis towards a user's eye. The "straight to eye" order is produced by an effective diffraction grating that is parallel to the x-axis and which is the resultant of the first and second diffraction gratings within the first digital approximation. Of course, higher diffractive orders are produced as well, but the amount of light coupled into these other orders is significantly less.

With reference to Figure 2A, it has been found that the difference in diffraction efficiency between the first diffraction grating and the second diffraction grating in the first digital approximation 22 means that unequal amounts of light are coupled into the first and second turn orders. In this example the first diffraction grating (which has a higher diffraction efficiency) is oriented at -30° to the y-axis. The second diffraction grating with the lower diffraction efficiency is oriented at +30° to the y-axis. Light that is diffracted by the first diffraction grating is turned into a direction 42 that is oriented at +120° to the y-axis, at a given wavelength. Light at the same wavelength that is diffracted by the second diffraction grating is coupled in a direction 44 that is oriented at -120° to the y-axis. A higher proportion of light is coupled into the direction 42 at +120° to the y-axis, and the difference in brightness between the two paths is proportional to the difference in diffraction efficiency between the first and second diffraction gratings.

In the example of Figure 2A a relatively small proportion of the incident light is directly diffracted out of the waveguide in a direction towards the viewer along the z-axis (i.e. a straight to eye order, which extends out of the plane of the page from the perspective of Figure 2A). A certain amount of light is coupled into the zero order and continues to propagate within the waveguide in a direction 46 that is substantially parallel to the y-axis.

Figure 2B shows how light interacts again with the first digital approximation 22 after it has been initially diffracted by the second diffraction grating into the direction 44 that is oriented at -120° relative to the y-axis. In this situation the light path is weakly diffracted by the combination of first and second diffraction grating so that it is coupled out of the waveguide 2 towards a viewer in a direction (not shown) along the z-axis. Light is also diffracted by the second diffraction grating so that it is coupled into a direction 48 that is parallel with the y-axis. However, a relatively small amount of light is diffracted into this order because of the difference in diffraction efficiency between the first and second diffraction gratings. As before, a certain amount of light continues to propagate within the waveguide under total internal direction along the direction 44 of propagation which, in this case, is oriented at -120° to the y-axis.

In operation, when light is received at the first portion 12 of the output element 6, along the input direction from the input grating 4, it is diffracted into one of several orders, as shown in Figures 2A and 2B. A significant proportion of the received light is coupled into the direction 42, which is at an angle of +120° to the y-axis. This diffracted light is directed towards the second portion 14 of the output element 6 (i.e. towards the right in the plan view of Figure 1). A smaller proportion of the received light is coupled into the direction 44, which is at an angle of -120° to the y-axis. These orders of light are then preferentially coupled out of the waveguide 2, towards a viewer.

As explained above, a significant proportion of the light diffracted in the first portion 12 extends in the direction 42, towards the second portion 14. These light paths then encounter the diffractive structures in the second portion 14 of the output element. In this case, the first diffractive element is oriented at +30°, which is orthogonal to the path of the incoming rays. Therefore, the first diffractive element, which has the higher diffraction efficiency, is preferentially arranged to couple rays out of the waveguide 2 and towards a viewer along the z-axis.

The second portion 14 of the output element 6 is effectively a mirror image of the first portion 12, reflected about the y-axis. Therefore, opposite diffractive interactions occur within the second portion 14 in comparison to the first portion 12. When light is received at the second portion 14 from the input grating 4 along the y-axis it is preferentially diffracted into a direction at an angle of -120° to the y-axis. These diffracted orders of light extend towards the left when viewed in the plan view of Figure 1, towards the first portion 12. A smaller proportion of light is diffracted in the second portion 14 into a direction that is at an angle of +120° to the y-axis, and these paths extend to the right in the plan view of Figure 1. The orders directed towards the first portion 12 by the second portion 14 are then preferentially diffracted out of the waveguide 2 and towards a viewer along the z-axis.

Light paths that are diffracted at -120° to the y-axis from the second portion 14 towards the first portion 12 are incident on the diffractive structures of the first portion 12. The first digital approximation 22 comprises a first diffractive optical element that is oriented at -30° to the y-axis, which is in a direction that is orthogonal to the incoming rays. Thus, rays that are received at the second portion 14 are preferentially turned to the path at -120° to the y-axis and then are preferentially coupled out of the waveguide 2 towards a viewer along the z-axis. This arrangement means that outcoupling from the waveguide 2 is more strongly promoted, following two-dimensional expansion, which advantageously improves the optical efficiency of the system. This reduces wasted light and, within an augmented reality system, means that battery life can be extended for the same brightness of output. Alternatively, it is possible to achieve higher brightness for the same input power, which can improve the visibility of augmented reality images, especially when set against bright external lighting conditions.

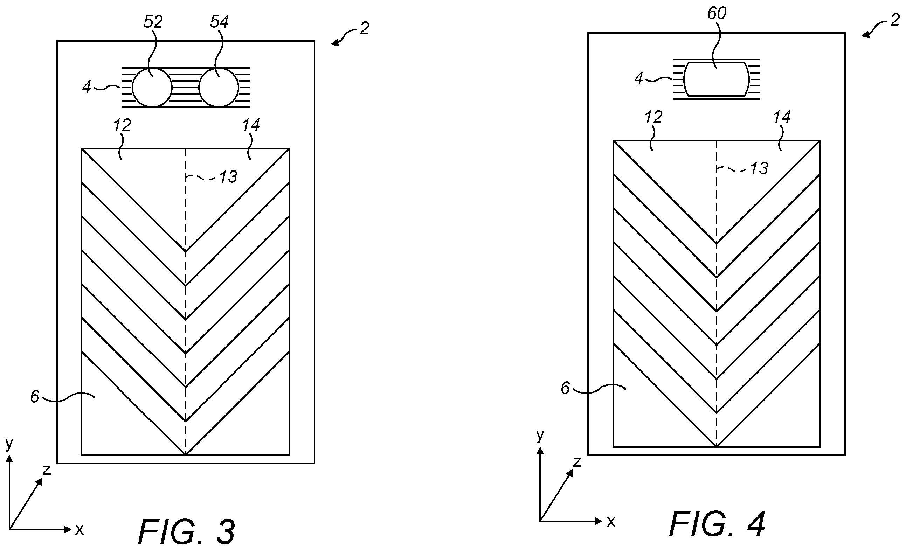

Figure 3 is a schematic plan view of a waveguide 2 in an embodiment of the invention showing two input pupils of light 52, 54 being received at an input grating 4. The waveguide 2 is substantially similar in design to the waveguide described above in relation to Figure 1. In this case, however, one or more light engines (not shown) are provided to supply two input pupils of light 52, 54 which are projected onto the input grating 4 in respective directions that are parallel to the z-axis. The input pupils 52, 54 are non-overlapping and are separated by around 5mm in this embodiment although a different separation could be provided, such as a separation of around 7mm in a different embodiment. The input grating 4 is configured to receive the input pupils 52, 54 and to diffract them so that they are coupled towards the output element 6 in directions that are parallel to the y-axis, and which are separated from one another in a direction that is parallel to the x-axis. In this way, the input pupils 52, 54 can be received respectively at the first portion 12 and the second portion 14 of the output element 6, on either side of the dividing line 13. The input pupils 52, 54 are received at positions that are symmetrically displaced from the dividing line 13.

The input pupils 52, 54 therefore undergo different diffractive interactions when they are received initially at the first and second portions 12, 14 respectively. The input pupils 52, 54 can therefore be expanded within the output element 6 in equal and opposite ways so that each can balance the effects of the other.

The input pupils 52, 54 are positioned so that they avoid the dividing line 13 between the first and second portions 12, 14. This can avoid any undesirable scattering that may occur when light interacts with the dividing portion 13. To promote this effect the input pupils are provided with cone angles when coupled toward the first and second portions 12, 14, which cone angles extend only in the first and second portions 12, 14 respectively, and do not intersect the dividing line 13. In this way, the first and second pupils 52, 54 can be provided with sufficiently small fields of view that each will only illuminate the first and second portions 12, 14 respectively. This can mitigate artefacts that might otherwise occur from an intersection of light with the dividing line 13.

Figure 4 is a schematic plan view of a waveguide 2 in another embodiment not according to the claimed subject matter.

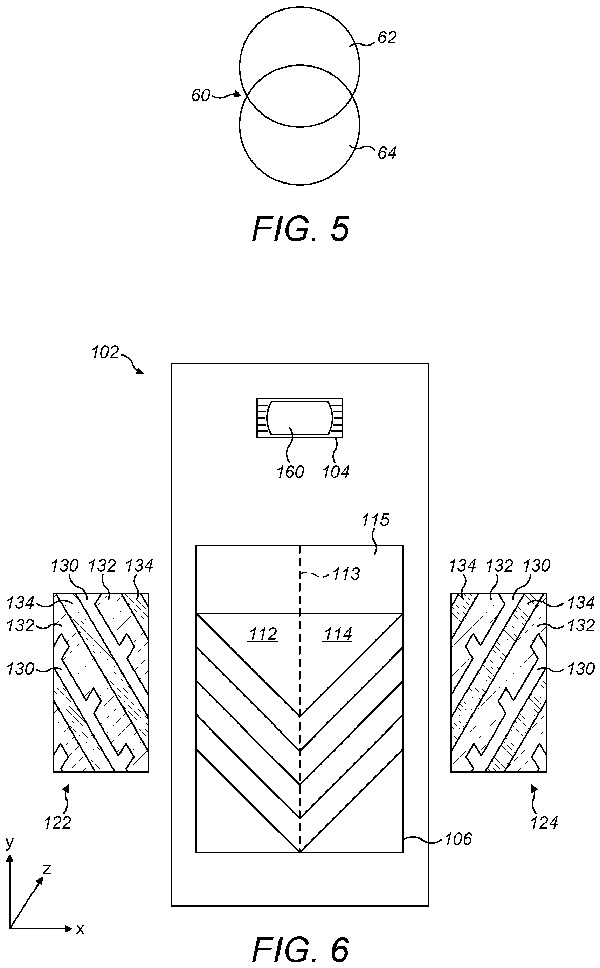

The waveguide 2 in Figure 4 is similar to the waveguide 2 in Figure 3, but in this case there is a single pupil 60 with an elliptical cross-sectional shape. The elliptical pupil of light 60 is centred on the dividing line 13 so that each half of the elliptical pupil separately illuminates the first portion 12 and the second portion 14. Figure 5 is a cross-sectional schematic view of the elliptical pupil 60, which shows that it is comprised of two partially overlapping circular pupils 62, 64. Each of the partially overlapping circular pupils 62, 64 is offset from the dividing line 13 in the direction of the x-axis so that they are received respectively at the first portion 12 and the second portion 14. In this way, the two halves of the elliptical pupil 60 can be expanded within the output element 6 in an equal and opposite way so that the effect of expanding and outcoupling each circular pupil 62, 64 balances the effect of expanding and outcoupling the other.

In another aspect the projector (not shown) can provide a non-elliptical pupil that has a cross-sectional shape that is longer in a dimension that is parallel to the input grating grooves than in a perpendicular dimension. In one example the input pupil may be rectangular. This may provide an elongate pupil that is received respectively in the first and second portions 12, 14, bridging the dividing line 13 between the first and second portions 12, 14. This configuration can improve the evenness of illumination, when compared to a conventional circular pupil that is received along the dividing line 13.

It has been found that this method of illuminating the waveguide 2 can advantageously improve the evenness of brightness from the output element. The output element design successfully couples light away from the central portion and the dividing line 13, and by illuminating the output element 6 with two pupils at off-centre positions the central portion can be more evenly illuminated.

Figure 6 is another schematic plan view of a waveguide 102 in another configuration. In this example, there is a single elliptical pupil 160 which is projected onto an input grating 104 along the z-axis. In this example a pre-expansion area 115 is shown above the output element 106. A pre-expansion area is usually required when using an output coupler having a hexagonal lattice. The pre-expansion section lies between the input grating and the 'imaging' section of the output element 6, which allows a sufficient two-dimensional expansion of the pupil, to fully cover the output region for each angle of the field of view. This pre-expansion region 115 is required due to the triangular nature of the pupil expansion.

The purpose of the pre-expansion area 115 is to provide two-dimensional expansion in the x-y plane while minimising outcoupling of light along the z-axis. This can be achieved in a number of ways, as would be understood by the skilled person. In just one example, a pair of diffraction gratings can be provided so that a first diffractive interaction re-directs light along the x-axis, and a second diffractive interaction re-directs light so that it propagates once more along the y-axis. The output element 106 comprises a first portion 112 and a second portion 114 having diffractive features that are different to one another. In the first portion 112, a first digital approximation 122 is provided, which is a digital approximation to a pair of crossed gratings having different diffraction efficiencies. In the second portion 114, a second digital approximation 124 is provided, which is a mirror-image of the first digital approximation 122. A dividing line 113 is provided between the first portion 112 and the second portion 114.

The first digital approximation 122 is different to the first digital approximation 22 described above in relation to Figure 1. In this arrangement in the first digital approximation 122 a first diffraction grating is provided with grooves that are angled at -30° to the y-axis and a second diffraction grating is represented by "notches" in the first diffraction grating, extending at an angle of +30° to the y-axis. Effectively, this provides a second diffraction grating represented by dashed lines in the sense that the notches do not provide a grating with continuous groove lines. The reduced overall length of the features provided in the second diffraction grating versus those features in the first diffraction grating, which have a continuous length, can give rise to a difference in diffraction efficiency, even if the same feature height is used. Three different step heights are provided for features in the first digital approximation 122, along lines that are angled at -30° to the y-axis. A first step height 130 is provided which has the lowest feature height. A second step 132 has an intermediate feature height. A third step 134 has the highest feature height. In this way, a stepped sawtooth profile can be provided for the first diffraction grating with grooves that are angled at - 30° to the y-axis with steps of increasing height from the first step 130, to the second step 132 and finally the third step 134. The pattern then repeats for the next groove in the grating. This can provide an approximated sawtooth profile, or a pseudo blazed aspect for the first diffraction grating. The second diffraction grating, by contrast, is provided by notches in the first diffraction grating which are at the second step 132 height only. It has been found that this arrangement can advantageously improve the efficiency of the output element 106 by preferentially coupling light into a particular direction, towards a viewer along the z-axis. The second digital approximation 124 is a mirror-image of the first digital approximation 122, and it also comprises first, second and third step heights 130, 132, 134. In the second digital approximation the first and third steps 130, 134 are angled in lines at +30° to the y-axis. The second step 132 is also angled at +30° to the y-axis and includes notches that are angled at -30° to the y-axis. Of course, the skilled person will appreciate that other techniques could be used to provide a pseudo blazed aspect to the diffraction gratings within the first and second digital approximations 122, 124. In one example this could be achieved by providing continually varying surface heights, rather than discrete step heights.

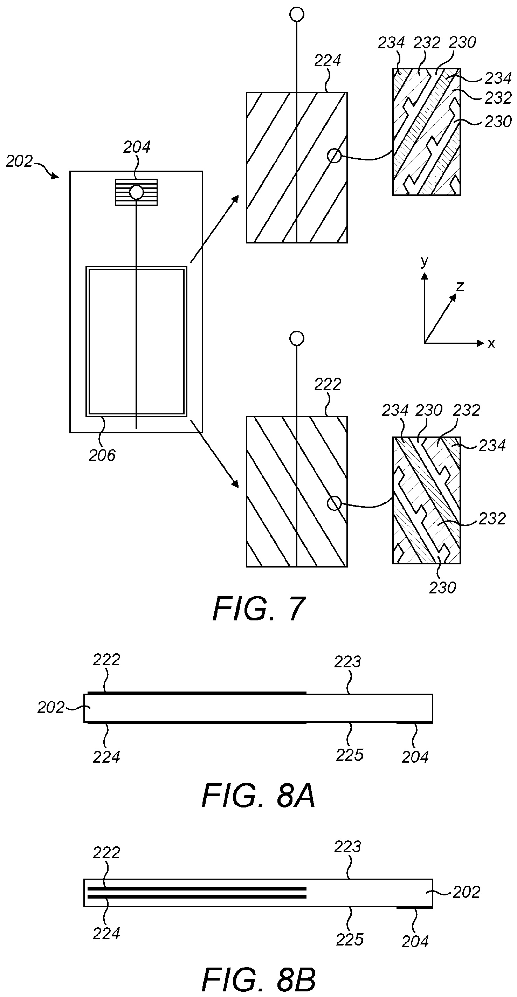

Figure 7 is a schematic exploded plan view of a waveguide 202 in another configuration. An input grating 204 is provided to couple light from a projector (not shown) towards an output element 206. The output element 206 comprises a first digital approximation 222 to a pair of crossed diffraction gratings and a second digital approximation 224 which is a mirror-image of the first digital approximation 222, reflected about the y-axis, having structures similar to those described above in relation to Figure 6. The first digital approximation 222 and the second digital approximation 224 are provided in different planes on or in the waveguide 202. In one embodiment, as shown in Figure 8A, the first digital approximation 222 is provided on a first planar surface 223 of the waveguide 202, and the second digital approximation 224 is provided on a second planar surface 225, which is opposite the first planar surface 223. In another embodiment, as shown in Figure 8B, the first digital approximation 222 and the second digital approximation 224 are provided in respective planes that are contained within the waveguide 202, separated from one another and from the first and second planar surfaces 223, 225. When viewed in the plane of the waveguide 202, the first and second digital approximations 222, 224 are arranged so that they substantially overlap with one another. That is to say, the first and second digital approximations 222, 224 have substantially the same outer shapes which are provided in registration with one another.

The first digital approximation 222 has a structure that is similar to that described above in relation to Figure 6. That is to say, the first digital approximation 222 has a first diffraction grating provided with grooves that are angled at -30° to the y-axis and a second diffraction grating is represented by "notches" in the first diffraction grating, extending at an angle of +30° to the y-axis. Three different step heights are provided for features in the first digital approximation 222, along lines that are angled at -30° to the y-axis. A first step 230 is provided which has the lowest feature height. A second step 232 has an intermediate feature height. A third step 234 has the highest feature height. In this way, a profile approximating a sawtooth can be provided for the first diffraction grating with grooves that are angled at -30° to the y-axis with steps of increasing height. This can provide a pseudo blazed aspect for the first diffraction grating. The second digital approximation has a structure that is similar to the first digital approximation, but is a mirror-image reflected about the y-axis.

The input grating 204 is positioned centrally on the waveguide 202 with respect to the x-axis. Light is coupled by the input grating 204 towards the output element 206 such that it encounters the first and second digital approximations 222, 224 substantially at the same time in their respective planes. As described previously, upon each interaction with either the first or second digital approximation 222, 224, light is diffracted primarily into one of four orders: a zero order which continues to propagate in a direction that is parallel with the y-axis, one of two "turn" orders which are diffracted respectively by the crossed diffraction gratings, and a "straight to eye" order which is diffracted out of the waveguide 202 along the z-axis towards a user's eye. For the first digital approximation 222, the difference in diffraction efficiency between the first diffraction grating and the second diffraction grating in the crossed gratings means that uneven amounts of light are coupled into the first and second turn orders. In this example the first diffraction grating (which has a higher diffraction efficiency) is oriented at -30° to the y-axis. The second diffraction grating with the lower diffraction efficiency is oriented at +30° to the y-axis. Light that is diffracted by the first diffraction grating is turned into a direction that is oriented at +120° to the y-axis, at a given wavelength. Light at the same wavelength that is diffracted by the second diffraction grating is coupled in a direction that is oriented at -120° to the y-axis. These turned orders will then experience diffraction by the second digital approximation 224 which is a mirror-image of the first digital approximation 222, reflected about the y-axis. Light that is turned by the first digital approximation 222 into an order that is oriented at +120° to the y-axis will encounter the second digital approximation 224 in a different plane of the waveguide 202. In this situation the light path is most strongly diffracted by the first diffraction grating within the second digital approximation 224 so that it is coupled out of the waveguide towards a viewer in a direction along the z-axis. Light is also diffracted by the second diffraction grating within the second digital approximation 224 so that it is coupled into a direction that is parallel with the y-axis. However, a relatively small amount of light is diffracted into this order because of the difference in diffraction efficiency between the first and second diffraction gratings. A certain amount of light continues to propagate within the waveguide under total internal reflection along the direction of propagation which, in this case, is oriented at +120° to the y-axis. An equal and opposite diffractive interaction occurs for light that is first turned by the second digital approximation 224 into an order that is oriented at -120° to the y-axis and is subsequently predominantly coupled out of the waveguide 202 and towards a viewer in a direction that is parallel to the z-axis.

This configuration can promote the turning of light within the waveguide 202 and subsequent outcoupling of light towards a viewer. This can advantageously improve the evenness of luminance from the waveguide 202. Specifically, this can improve luminance from a central band which is aligned with the input grating 204 because each of the first and second digital approximations 222, 224 have straight-to-eye orders, which means that a component of light is coupled directly towards the user's eyes on first interaction, along the z-axis. Other orders of light are expanded within the waveguide 202, but the configuration promotes coupling back towards the central region to improve its relative luminance.

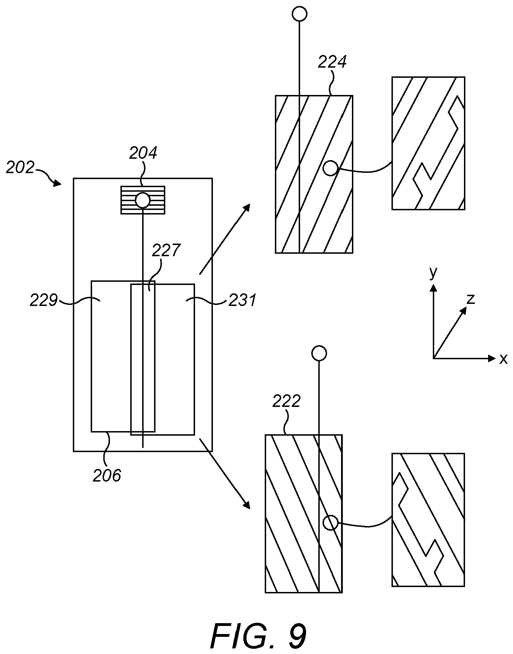

Figure 9 is a schematic exploded plan view of a waveguide 202 in an alternative configuration. In this configuration, and when viewed in the plane of the waveguide 202, the first and second digital approximations 222, 224 are arranged so that they include an overlapping area 227, and first and second non-overlapping areas 229, 231. The overlapping area 227 is provided in a central region of the waveguide 202, aligned with the input grating 204 along the y-axis. The first non-overlapping area 229 is a region where only the first digital approximation 222 is present, and the second non-overlapping area 231 is a region where only the second digital approximation 224 is present. In this way, a large region can be provided for the output element 206 with these overlapping digital approximations 222, 224 in different planes.

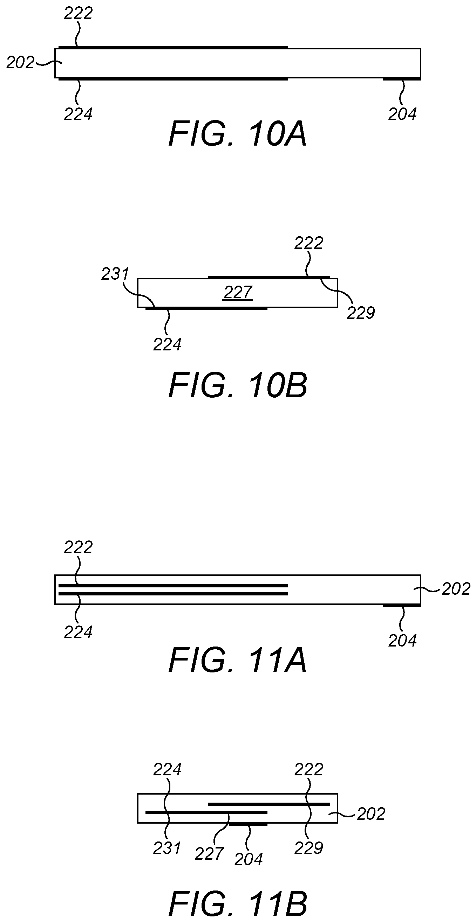

In one embodiment, as shown in Figure 10A, the first digital approximation 222 is provided on a first planar surface 223 of the waveguide 202, and the second digital approximation 224 is provided on a second planar surface 225, which is opposite the first planar surface 223. In another embodiment, as shown in Figures 11A and 11B, the first digital approximation 222 and the second digital approximation 224 are provided in respective planes that are contained within the waveguide 202, separated from one another and from the first and second planar surfaces 223, 225. Figures 10B and 11B show end views of the waveguide 202 in the different embodiments showing the overlapping area 227 and the first and second non-overlapping areas 229, 231. The input grating 204 has been omitted from Figure 10B for ease of illustration.

It has been found that this arrangement leads to fewer interactions of the waveguiding rays with grating regions 222 and 224, resulting in less scatter and improved contrast in the output image. Since the output diffractive optical structures 222 and 224 overlap along the central region and have close proximity to each other, a ray turned by one grating does not have to travel far before encountering the second grating and being partially diffracted to the user. This arrangement helps improve the light output in the central region of the angular image emanating from the waveguide.

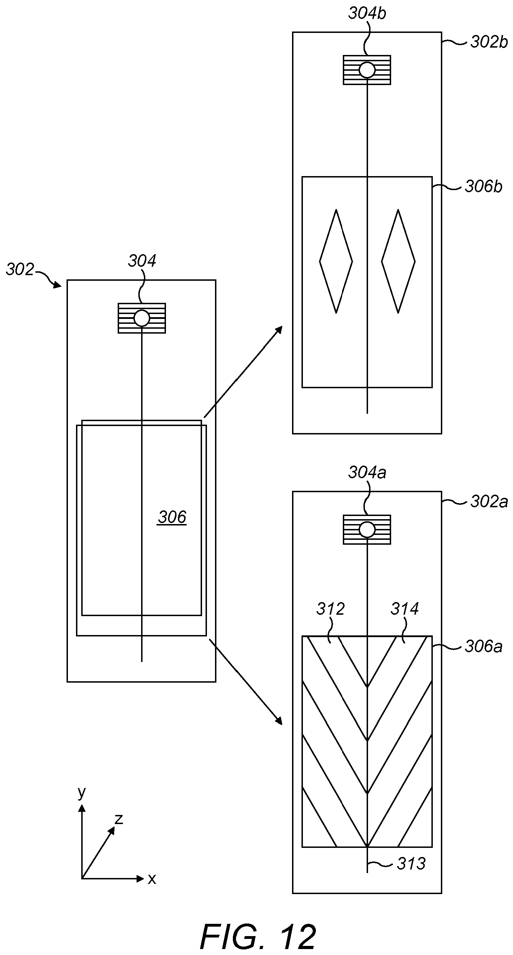

Figure 12 is a schematic exploded plan view of a waveguide stack in an alternative configuration. In this arrangement a first waveguide 302a is stacked on top of a second waveguide 302b with an air gap provided in between. The first and second waveguides 302a, 302b are adhered to one another using glue or some other adhesive, and spacers are provided between them in order to maintain a constant separation. A single projector (not shown) is provided for providing input light towards the first and second waveguides 302a, 302b in a direction that is parallel to the z-axis. Light from the projector is received at a first input grating 304a on the first waveguide 302a and a second input grating 304b on the second waveguide 302b. The first and second input gratings 304a, 304b are stacked on top of one another along the z-axis.

The first waveguide 302a comprises a first output element 306a for receiving light that is coupled into the first waveguide 302a by the first input grating 304a. In this embodiment the first output element 306a comprises first and second portions 312, 314 in a manner similar to that described above in relation to Figure 1 or Figure 6. Thus, in the first portion 312, a first digital approximation (not shown) is provided, which is an approximation to a pair of crossed gratings having different diffraction efficiencies. In the second portion 314, a second digital approximation (not shown) is provided, which is a mirror-image of the first digital approximation 322. A dividing line 313 is provided between the first portion 312 and the second portion 314 along a direction that is parallel to the y-axis. The first input grating 304a is aligned with the dividing line 313, and a single circular input pupil is received at the first input grating 304a from the projector. In another configuration the first output element 306a comprises a pair of crossed gratings, such as those described in WO 2016/020643. In a further alternative configuration the first output element 306a comprises an arrangement such as that shown in Figure 7 or 9 in which there is a first digital approximation to a pair of crossed gratings, and a second digital approximation which is a mirror-image of the first digital approximation, wherein the first and second digital approximations are provided in different planes in the first waveguide 302a.

The second waveguide 302b comprises an output element 306b for receiving light that is coupled into the second waveguide 302b by the second input grating 304b. The output element 306b is stacked on top of the output element 306a in the first waveguide 306a with respect to the z-axis. In this embodiment the output element 306b is a photonic crystal, such as is described in WO 2016/020643 or in WO2018/178626 for expanding input light in two dimensions in the second waveguide 302b. The photonic crystal elements are shown schematically in Figure 12.

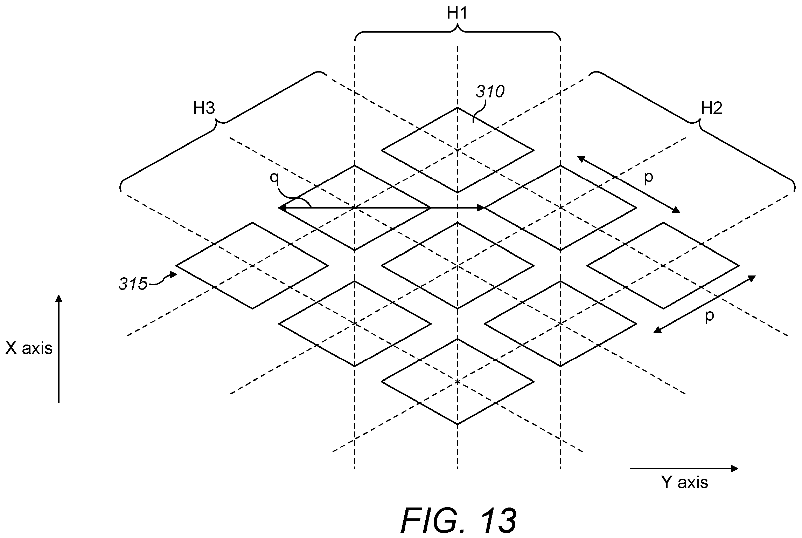

Figure 13 is a top view of a portion of a photonic crystal 315 for use in the output element 306b. The optical structures 310 in this arrangement are parallelograms having four substantially straight sides and four vertices. The regular arrangement of optical structures 310 in the array may be thought of as a number of effective diffraction gratings or diffractive optical structures. In particular it is possible to define a grating H1 with optical structures aligned along the x-axis with adjacent rows of optical structures separated by a distance q. Grating H2 is arranged with rows of optical structures 310 at an angle of -30° to the y-axis, with adjacent rows separated by a distance p, known as the lattice constant. Finally, grating H3 is arranged with rows of optical structures at an angle of +30° to the y-axis, with adjacent rows separated by a distance p.

Referring to Figure 12, when light from the second input grating 304b is incident on the photonic crystal 315 it undergoes multiple simultaneous diffractions by the various diffractive optical elements. Light can be diffracted into a zero order, which is a continuation of the propagation of the incident light. Light can also be diffracted into a first diffraction order by grating H1. The first order is coupled out of the waveguide along the z-axis, towards a viewer which can be defined as the straight to eye order. Light can also be diffracted into a first diffracted order by the H2 diffractive optical structure. This first order is diffracted at +120° to the y-axis, and this light beam goes on to make further interactions with the photonic crystal. Light can also be diffracted into a first diffracted order by the H3 diffractive optical structure. This first order is diffracted at -120° to the y-axis, and this light beam goes on to make further interactions with the photonic crystal. A subsequent diffractive interaction with the H2 diffractive optical structure can couple light out of the waveguide in the positive z-axis towards a viewer. Thus, light can be coupled out of the waveguide at each point, and yet light can continue to expand within the waveguide in two dimensions. The symmetry of the photonic crystal means that every exit beam has the same angular and chromatic properties as the input beam, which means that a polychromatic (as well as a monochromatic) light source may be used as the input beam with this photonic crystal arrangement.

In this configuration light can be expanded in two dimensions by the first output element 306a in the first waveguide 302a and by the second output element 306b in the second waveguide 306b. There is no interaction between the first and second output elements 306a, 306b since they are on or in separate waveguides with an air gap in between them.

In this way, it is possible to provide a stacked waveguide arrangement that has some of the advantages of a photonic crystal structure and some of the advantages of the structure comprising first and second digital approximations to crossed gratings. One notable effect of this is on the straight to eye order. In the first output element 306a there is a relatively weak straight to eye order because the first and second digital approximations are efficient at turning light within the first waveguide 302a. If the first output element 306a were used on its own then this effect could create a lower relative brightness in the central portion of the first output element 306a. On the other hand, in the second output element 306b there is a relatively strong straight to eye order because of the effect of the H1 diffractive optical structure within the photonic crystal. If the second output element 306b were used on its own then this could create a higher relative brightness in the central portion of the second output element 306b. By combining the first and second output elements 306a, 306b together in a waveguide stack it is possible for these effects to balance one another so that a more even illumination can be provided from the combined output element.

The configuration above, described in relation to Figures 12 and 13, is in the context of a single circular input pupil that is provided to the first and second input gratings 304a, 304b at a central position on or in the waveguide 302. However, it would also be possible to provide multiple input pupils, such as two separated input pupils or two overlapping circular input pupils, as described in the embodiments above.

The configuration in Figure 12 described above involves first and second stacked waveguides 302a, 302b. In another configuration it would be possible to combine the first and second output elements 306b in different planes in a single waveguide, either on opposite surfaces of the waveguide or in separated internal planes of the waveguide. For this to be done, the two diffractive optical elements overlaid on one another in the photonic crystal array should be arranged such that they are respectively parallel to the first and second linear diffractive optical elements in the second output element 306b. This ensures that the diffractive features can cooperate with one another in the expansion and outcoupling of light.

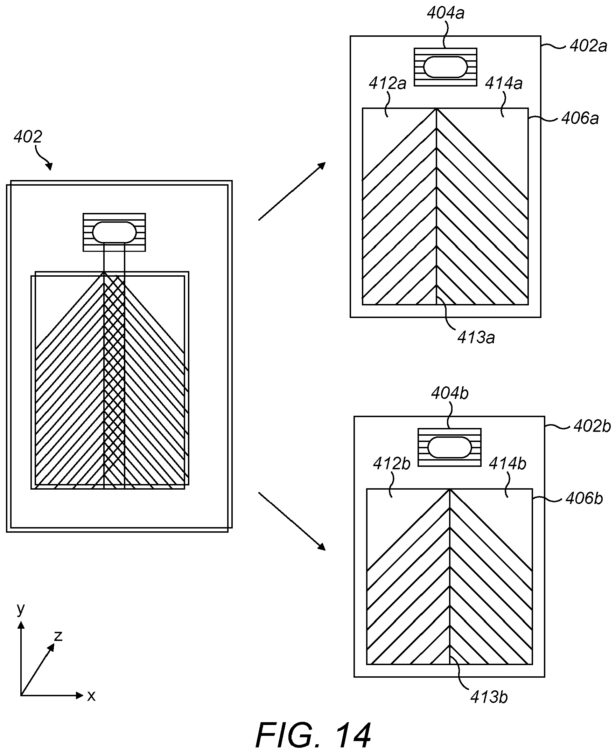

Figure 14 is a schematic plan view of first and second waveguides 402a, 402b in a waveguide stack 402 in another configuration. Each of the first and second waveguides 402a, 402b has a structure that is similar to the first waveguide 302a described above in relation to Figure 12. Thus, the first waveguide 402a comprises a first input grating 404a and a first output element 406a. Equally, the second waveguide 402b comprises a second input grating 404b and a second output element 406b, stacked on top of the corresponding components of the first waveguide 402a with respect to the z-axis. The first output element 406a comprises first and second portions 412a, 414a where, in the first portion 412a, a first digital approximation (not shown) is provided, which is an approximation to a pair of crossed gratings having different diffraction efficiencies. In the second portion 414a, a second digital approximation (not shown) is provided, which is a mirror-image of the first digital approximation 422a. A dividing line 413a is provided between the first portion 412a and the second portion 414a along a direction that is parallel to the y-axis. The second waveguide 402b is substantially similar to the first waveguide 402a except that the position of the dividing line 413b is shifted in the direction of the x-axis. Thus, each of the first and second portions 412a,b, 414a,b in the first and second waveguides 402a, 402b respectively present "chevron" patterns that are shifted relative to one another along the x-axis.

A projector (not shown) is provided for providing input light towards the first and second input gratings 404a, 404b in a direction that is parallel to the z-axis. The input pupil in this case has an elliptical cross-sectional shape as shown in Figure 5 so that the elliptical pupil 60 is comprised of two partially overlapping circular pupils 62, 64. In the arrangement in Figure 14 one circular pupil 62 is aligned with the first dividing line 413a and the other circular pupil 64 is aligned with the second dividing line 413b.

In this way, each half of the elliptical pupil 60 can be expanded respectively within the first and second waveguides 402a, 402b in the same way as a single pupil would be expanded in the manner described in relation to Figure 1. The pupils are expanded about positions that are offset from one another with respect to the x-axis. It has been found that this approach can improve the evenness of the brightness that it output from the output region. In particular, there is improve evenness along a central band which is positioned between the first and second dividing lines 413a, 413b because the expansion of light within the first waveguide 402a is balanced by the effect of the expansion of light within the second waveguide 402b.

In an alternative configuration in the arrangement of Figure 14 the projector may provide two or more circular input pupils that are non-overlapping with one another.

## Claims

1. An optical assembly for use in an augmented reality or virtual reality display, comprising:
a waveguide (2)
at least one projector (8)
an input diffractive optical structure (4) configured to receive light from the at least one projector and couple the received light into the waveguide; and
an output diffractive optical structure (6) configured to receive light from the input diffractive optical element in an input direction, wherein the output diffractive optical structure comprises at least a first diffractive optical element and a second diffractive optical element with different respective diffraction efficiencies, wherein the first diffractive optical element has a relatively high diffraction efficiency and the second diffractive optical element has a relatively low diffraction efficiency and the first and second diffractive optical elements are overlaid on one another in or on the waveguide, wherein the first diffractive optical element is configured to receive light along the input direction and couple it towards the second diffractive optical element which can then act as an output diffractive optical element, providing outcoupled orders towards a viewer, and wherein the second diffractive optical element is configured to receive light along the input direction and couple it towards the first diffractive optical element which can then act as an output diffractive optical element, providing outcoupled orders towards a viewer;
wherein the output diffractive optical structure comprises a first portion (12) and a second portion (14), wherein in the first portion the first diffractive optical element is configured to couple light from the input direction towards the second portion and wherein the second diffractive optical element is configured to couple light from the input direction away from the second portion, and in the second portion the first diffractive optical element is configured to couple light from the input direction towards the first portion and wherein the second diffractive optical element is configured to couple light from the input direction away from the first portion;
**characterised in that** the at least one projector is configured to provide a first pupil (52) and a second pupil (54) of light which are coupled toward the output diffractive optical structure by the input diffractive optical structure substantially in parallel along the input direction at displaced positions from one another so that they are received respectively at the first portion and the second portion of the output diffractive optical structure,
wherein there is a dividing line (13) between the first and second portions (12, 14) of the output diffractive optical structure,
wherein the first pupil has a first cone angle when coupled toward the output diffractive optical structure by the input diffractive optical structure, wherein the cone angle extends only in the first portion and does not intersect the dividing line,
and wherein the second pupil has a second cone angle when coupled toward the output diffractive optical structure by the input diffractive optical structure, wherein the second cone angle extends only in the second portion and does not intersect the dividing line.

2. The optical assembly of claim 1, wherein the centre of the first pupil is received at the first portion at a first distance from the dividing line and the second pupil is received at the second portion at a second distance from the dividing line, and wherein the first and second distance are substantially equal to one another.

3. The optical assembly of claim 1 or claim 2, wherein the two input pupils from the two input pupils from the projector are non-overlapping with one another.

4. The optical assembly of any of the preceding claims comprising a single projector configured to generate the two input pupils.

5. The optical assembly of any of claims 1 to 3, comprising two projectors which generate the two input pupils.

6. The optical assembly of any of the preceding claims, wherein the first diffractive optical element is blazed or pseudo blazed.

7. The optical assembly of claim 6, wherein the first diffractive optical element has a stepped profile.

8. A method of operating an optical assembly in an augmented reality or virtual reality display, wherein the assembly comprises:
a waveguide;
at least one projector;
an input diffractive optical structure configured to receive light from the at least one projector and couple the received light into the waveguide; and
an output diffractive optical structure configured to receive light from the input diffractive optical element in an input direction, wherein the output diffractive optical structure comprises at least a first diffractive optical element and a second diffractive optical element with different respective diffraction efficiencies, wherein the first diffractive optical element has a relatively high diffraction efficiency and the second diffractive optical element has a relatively low diffraction efficiency and the first and second diffractive optical elements are overlaid on one another in or on the waveguide, wherein the first diffractive optical element is configured to receive light along the input direction and couple it towards the second diffractive optical element which can then act as an output diffractive optical element, providing outcoupled orders towards a viewer, and wherein the second diffractive optical element is configured to receive light along the input direction and couple it towards the first diffractive optical element which can then act as an output diffractive optical element, providing outcoupled orders towards a viewer;
wherein the output diffractive optical structure comprises a first portion (12) and a second portion (14), wherein in the first portion the first diffractive optical element is configured to couple light from the input direction towards the second portion and wherein the second diffractive optical element is configured to couple light from the input direction away from the second portion, and in the second portion the first diffractive optical element is configured to couple light from the input direction towards the first portion and wherein the second diffractive optical element is configured to couple light from the input direction away from the first portion;
and wherein the method comprises the step of:
providing a first pupil and a second pupil light and coupling the first and second pupils towards the output diffractive optical structure by the input diffractive optical structure substantially in parallel along the input direction at displaced positions from one another so that they are received respectively at the first portion and the second portion of the output diffractive optical structure,
wherein there is a dividing line (13) between the first and second portions (12, 14) of the output diffractive optical structure,
wherein the first pupil has a first cone angle when coupled toward the output diffractive optical structure by the input diffractive optical structure, wherein the cone angle extends only in the first portion and does not intersect the dividing line,
and wherein the second pupil has a second cone angle when coupled toward the output diffractive optical structure by the input diffractive optical structure, wherein the second cone angle extends only in the second portion and does not intersect the dividing line.

## Patentansprüche

1. Optische Anordnung zur Verwendung in einer Augmented-Reality- oder Virtual-Reality-Anzeige, umfassend:
einen Wellenleiter (2);
mindestens einen Projektor (8);
eine diffraktive optische Eingangsstruktur (4), die dazu konfiguriert ist, Licht von dem mindestens einen Projektor zu empfangen und das empfangene Licht in den Wellenleiter zu koppeln; und
eine diffraktive optische Ausgangsstruktur (6), die dazu konfiguriert ist, Licht von dem diffraktiven optischen Eingangselement in einer Eingangsrichtung zu empfangen, wobei die diffraktive optische Ausgangsstruktur mindestens ein erstes diffraktives optisches Element und ein zweites diffraktives optisches Element mit unterschiedlichen jeweiligen Beugungseffizienzen umfasst, wobei das erste diffraktive optische Element eine relativ hohe Beugungseffizienz aufweist und das zweite diffraktive optische Element eine relativ niedrige Beugungseffizienz aufweist und das erste und das zweite diffraktive optische Element in oder auf dem Wellenleiter aufeinander gelegt sind, wobei das erste diffraktive optische Element dazu konfiguriert ist, Licht entlang der Eingangsrichtung zu empfangen und es zu dem zweiten diffraktiven optischen Element hin zu koppeln, das dann als ein diffraktives optisches Ausgangselement agieren kann, ausgekoppelte Ordnungen zu einem Betrachter hin bereitstellend, und wobei das zweite diffraktive optische Element dazu konfiguriert ist, Licht entlang der Eingangsrichtung zu empfangen und es zu dem ersten diffraktiven optischen Element hin zu koppeln, das dann als ein diffraktives optisches Ausgangselement agieren kann, ausgekoppelte Ordnungen zu einem Betrachter hin bereitstellend;
wobei die diffraktive optische Ausgangsstruktur einen ersten Abschnitt (12) und einen zweiten Abschnitt (14) umfasst, wobei in dem ersten Abschnitt das erste diffraktive optische Element dazu konfiguriert ist, Licht aus der Eingangsrichtung zu dem zweiten Abschnitt hin zu koppeln, und wobei das zweite diffraktive optische Element dazu konfiguriert ist, Licht aus der Eingangsrichtung von dem zweiten Abschnitt weg zu koppeln, und in dem zweiten Abschnitt das erste diffraktive optische Element dazu konfiguriert ist, Licht aus der Eingangsrichtung zu dem ersten Abschnitt hin zu koppeln, und wobei das zweite diffraktive optische Element dazu konfiguriert ist, Licht aus der Eingangsrichtung von dem ersten Abschnitt weg zu koppeln;
**dadurch gekennzeichnet, dass** mindestens ein Projektor dazu konfiguriert ist, eine erste Pupille (52) und eine zweite Pupille (54) von Licht bereitzustellen, die zu der diffraktiven optischen Ausgangsstruktur hin durch die diffraktive optische Eingangsstruktur gekoppelt sind, im Wesentlichen parallel entlang der Eingangsrichtung in voneinander verschobenen Positionen, so dass sie jeweils an dem ersten Abschnitt und dem zweiten Abschnitt der diffraktiven optischen Ausgangsstruktur empfangen werden,
wobei eine Trennlinie (13) zwischen dem ersten und dem zweiten Abschnitt (12, 14) der diffraktiven optischen Ausgangsstruktur vorliegt,
wobei die erste Pupille einen ersten Kegelwinkel aufweist, wenn sie zu der diffraktiven optischen Ausgangsstruktur hin durch die diffraktive optische Eingangsstruktur gekoppelt ist, wobei sich der Kegelwinkel nur in dem ersten Abschnitt erstreckt und die Trennlinie nicht schneidet,
und wobei die zweite Pupille einen zweiten Kegelwinkel aufweist, wenn sie zu der diffraktiven optischen Ausgangsstruktur hin durch die diffraktive optische Eingangsstruktur gekoppelt ist, wobei sich der zweite Kegelwinkel nur in dem zweiten Abschnitt erstreckt und die Trennlinie nicht schneidet.

2. Optische Anordnung nach Anspruch 1, wobei die Mitte der ersten Pupille an dem ersten Abschnitt in einem ersten Abstand von der Trennlinie empfangen wird und die zweite Pupille an dem zweiten Abschnitt in einem zweiten Abstand von der Trennlinie empfangen wird, und wobei der erste und der zweite Abstand im Wesentlichen gleich zueinander sind.

3. Optische Anordnung nach Anspruch 1 oder Anspruch 2, wobei die zwei Eingangspupillen von den zwei Eingangspupillen von dem Projektor nicht miteinander überlappend sind.

4. Optische Anordnung nach einem der vorhergehenden Ansprüche, umfassend einen einzigen Projektor, der dazu konfiguriert ist, die zwei Eingangspupillen zu erzeugen.

5. Optische Anordnung nach einem der Ansprüche 1 bis 3, umfassend zwei Projektoren, die die zwei Eingangspupillen erzeugen.

6. Optische Anordnung nach einem der vorhergehenden Ansprüche, wobei das erste diffraktive optische Element geblazt oder pseudogeblazt ist.

7. Optische Anordnung nach Anspruch 6, wobei das erste diffraktive optische Element ein Stufenprofil aufweist.

8. Verfahren zum Betreiben einer optischen Anordnung in einer Augmented-Reality- oder Virtual-Reality-Anzeige, wobei die Anordnung umfasst:
einen Wellenleiter;
mindestens einen Projektor;
eine diffraktive optische Eingangsstruktur, die dazu konfiguriert ist, Licht von dem mindestens einen Projektor zu empfangen und das empfangene Licht in den Wellenleiter zu koppeln; und
eine diffraktive optische Ausgangsstruktur, die dazu konfiguriert ist, Licht von dem diffraktiven optischen Eingangselement in einer Eingangsrichtung zu empfangen, wobei die diffraktive optische Ausgangsstruktur mindestens ein erstes diffraktives optisches Element und ein zweites diffraktives optisches Element mit unterschiedlichen jeweiligen Beugungseffizienzen umfasst, wobei das erste diffraktive optische Element eine relativ hohe Beugungseffizienz aufweist und das zweite diffraktive optische Element eine relativ niedrige Beugungseffizienz aufweist und das erste und das zweite diffraktive optische Element in oder auf dem Wellenleiter aufeinander gelegt sind, wobei das erste diffraktive optische Element dazu konfiguriert ist, Licht entlang der Eingangsrichtung zu empfangen und es zu dem zweiten diffraktiven optischen Element hin zu koppeln, das dann als ein diffraktives optisches Ausgangselement agieren kann, ausgekoppelte Ordnungen zu einem Betrachter hin bereitstellend, und wobei das zweite diffraktive optische Element dazu konfiguriert ist, Licht entlang der Eingangsrichtung zu empfangen und es zu dem ersten diffraktiven optischen Element hin zu koppeln, das dann als ein diffraktives optisches Ausgangselement agieren kann, ausgekoppelte Ordnungen zu einem Betrachter hin bereitstellend;
wobei die diffraktive optische Ausgangsstruktur einen ersten Abschnitt (12) und einen zweiten Abschnitt (14) umfasst, wobei in dem ersten Abschnitt das erste diffraktive optische Element dazu konfiguriert ist, Licht aus der Eingangsrichtung zu dem zweiten Abschnitt hin zu koppeln, und wobei das zweite diffraktive optische Element dazu konfiguriert ist, Licht aus der Eingangsrichtung von dem zweiten Abschnitt weg zu koppeln, und in dem zweiten Abschnitt das erste diffraktive optische Element dazu konfiguriert ist, Licht aus der Eingangsrichtung zu dem ersten Abschnitt hin zu koppeln, und wobei das zweite diffraktive optische Element dazu konfiguriert ist, Licht aus der Eingangsrichtung von dem ersten Abschnitt weg zu koppeln;
und wobei das Verfahren den Schritt umfasst:
Bereitstellen eines ersten Pupillen- und eines zweiten Pupillenlichts und Koppeln der ersten und der zweiten Pupille zu der diffraktiven optischen Ausgangsstruktur hin durch die diffraktive optische Eingangsstruktur, im Wesentlichen parallel entlang der Eingangsrichtung in voneinander verschobenen Positionen, so dass sie jeweils an dem ersten Abschnitt und dem zweiten Abschnitt der diffraktiven optischen Ausgangsstruktur empfangen werden,
wobei eine Trennlinie (13) zwischen dem ersten und dem zweiten Abschnitt (12, 14) der diffraktiven optischen Ausgangsstruktur vorliegt,
wobei die erste Pupille einen ersten Kegelwinkel aufweist, wenn sie zu der diffraktiven optischen Ausgangsstruktur hin durch die diffraktive optische Eingangsstruktur gekoppelt ist, wobei sich der Kegelwinkel nur in dem ersten Abschnitt erstreckt und die Trennlinie nicht schneidet,
und wobei die zweite Pupille einen zweiten Kegelwinkel aufweist, wenn sie zu der diffraktiven optischen Ausgangsstruktur hin durch die diffraktive optische Eingangsstruktur gekoppelt ist, wobei sich der zweite Kegelwinkel nur in dem zweiten Abschnitt erstreckt und die Trennlinie nicht schneidet.

## Revendications

1. Ensemble optique destiné à être utilisé dans un dispositif d'affichage de réalité augmentée ou de réalité virtuelle, comprenant :
un guide d'ondes (2)
au moins un projecteur (8)
une structure optique de diffraction d'entrée (4) configurée pour recevoir de la lumière de l'au moins un projecteur et coupler la lumière reçue dans le guide d'ondes ; et
une structure optique de diffraction de sortie (6) configurée pour recevoir de la lumière de l'élément optique de diffraction d'entrée dans une direction d'entrée, dans lequel la structure optique de diffraction de sortie comprend au moins un premier élément optique de diffraction et un deuxième élément optique de diffraction avec des efficacités de diffraction respectives différentes, dans lequel le premier élément optique de diffraction a une efficacité de diffraction relativement élevée et le deuxième élément optique de diffraction a une efficacité de diffraction relativement faible et les premier et deuxième éléments optiques de diffraction sont superposés l'un sur l'autre dans ou sur le guide d'ondes, dans lequel le premier élément optique de diffraction est configuré pour recevoir de la lumière le long de la direction d'entrée et la coupler vers le deuxième élément optique de diffraction qui peut alors agir comme un élément optique de diffraction de sortie, fournissant des ordres couplés en sortie vers un visualiseur, et dans lequel le deuxième élément optique de diffraction est configuré pour recevoir de la lumière le long de la direction d'entrée et la coupler vers le premier élément optique de diffraction qui peut alors agir comme un élément optique de diffraction de sortie, fournissant des ordres couplés en sortie vers un visualiseur ;
dans lequel la structure optique de diffraction de sortie comprend une première partie (12) et une deuxième partie (14), dans lequel dans la première partie le premier élément optique de diffraction est configuré pour coupler de la lumière depuis la direction d'entrée vers la deuxième partie et dans lequel le deuxième élément optique de diffraction est configuré pour coupler de la lumière depuis la direction d'entrée à l'écart de la deuxième partie, et dans la deuxième partie le premier élément optique de diffraction est configuré pour coupler de la lumière depuis la direction d'entrée vers la première partie et dans lequel le deuxième élément optique de diffraction est configuré pour coupler de la lumière depuis la direction d'entrée à l'écart de la première partie ;
**caractérisé en ce que** l'au moins un projecteur est configuré pour fournir une première pupille (52) et une deuxième pupille (54) de lumière qui sont couplées vers la structure optique de diffraction de sortie par la structure optique de diffraction d'entrée sensiblement en parallèle le long de la direction d'entrée au niveau de positions déplacées les unes par rapport aux autres de manière à être reçues respectivement au niveau de la première partie et de la deuxième partie de la structure optique de diffraction de sortie,
dans lequel il y a une ligne de division (13) entre les première et deuxième parties (12, 14) de la structure optique de diffraction de sortie,
dans lequel la première pupille a un premier angle de cône lorsqu'elle est couplée vers la structure optique de diffraction de sortie par la structure optique de diffraction d'entrée, dans lequel l'angle de cône s'étend uniquement dans la première partie et ne coupe pas la ligne de division,
et dans lequel la deuxième pupille a un deuxième angle de cône lorsqu'elle est couplée vers la structure optique de diffraction de sortie par la structure optique de diffraction d'entrée, dans lequel le deuxième angle de cône s'étend uniquement dans la deuxième partie et ne coupe pas la ligne de division.

2. Ensemble optique selon la revendication 1, dans lequel le centre de la première pupille est reçu au niveau de la première partie à une première distance de la ligne de division et la deuxième pupille est reçue au niveau de la deuxième partie à une deuxième distance de la ligne de division, et dans lequel les première et deuxième distances sont sensiblement égales l'une à l'autre.

3. Ensemble optique selon la revendication 1 ou la revendication 2, dans lequel les deux pupilles d'entrée des deux pupilles d'entrées du projecteur ne se chevauchent pas l'une avec l'autre.

4. Ensemble optique selon l'une quelconque des revendications précédentes comprenant un projecteur unique configuré pour générer les deux pupilles d'entrée.

5. Ensemble optique selon l'une quelconque des revendications 1 à 3, comprenant deux projecteurs qui génèrent les deux pupilles d'entrée.

6. Ensemble optique selon l'une quelconque des revendications précédentes, dans lequel le premier élément optique de diffraction est blazé ou pseudo-blazé.

7. Ensemble optique selon la revendication 6, dans lequel le premier élément optique de diffraction a un profil étagé.

8. Procédé de fonctionnement d'un ensemble optique dans un dispositif d'affichage de réalité augmentée ou de réalité virtuelle, dans lequel l'ensemble comprend :
un guide d'ondes ;
au moins un projecteur ;
une structure optique de diffraction d'entrée configurée pour recevoir de la lumière de l'au moins un projecteur et coupler la lumière reçue dans le guide d'ondes ; et
une structure optique de diffraction de sortie configurée pour recevoir de la lumière de l'élément optique de diffraction d'entrée dans une direction d'entrée, dans lequel la structure optique de diffraction de sortie comprend au moins un premier élément optique de diffraction et un deuxième élément optique de diffraction avec des efficacités de diffraction respectives différentes, dans lequel le premier élément optique de diffraction a une efficacité de diffraction relativement élevée et le deuxième élément optique de diffraction a une efficacité de diffraction relativement faible et les premier et deuxième éléments optiques de diffraction sont superposés l'un sur l'autre dans ou sur le guide d'ondes, dans lequel le premier élément optique de diffraction est configuré pour recevoir de la lumière le long de la direction d'entrée et la coupler vers le deuxième élément optique de diffraction qui peut alors agir comme un élément optique de diffraction de sortie, fournissant des ordres couplés en sortie vers un visualiseur, et dans lequel le deuxième élément optique de diffraction est configuré pour recevoir de la lumière le long de la direction d'entrée et la coupler vers le premier élément optique de diffraction qui peut alors agir comme un élément optique de diffraction de sortie, fournissant des ordres couplés en sortie vers un visualiseur ;
dans lequel la structure optique de diffraction de sortie comprend une première partie (12) et une deuxième partie (14), dans lequel dans la première partie le premier élément optique de diffraction est configuré pour coupler de la lumière depuis la direction d'entrée vers la deuxième partie et dans lequel le deuxième élément optique de diffraction est configuré pour coupler de la lumière depuis la direction d'entrée à l'écart de la deuxième partie, et dans la deuxième partie le premier élément optique de diffraction est configuré pour coupler de la lumière depuis la direction d'entrée vers la première partie et dans lequel le deuxième élément optique de diffraction est configuré pour coupler de la lumière depuis la direction d'entrée à l'écart de la première partie ;
et dans lequel le procédé comprend l'étape de :
fourniture d'une première pupille et d'une deuxième pupille de lumière et de couplage des première et deuxième pupilles vers la structure optique de diffraction de sortie par la structure optique de diffraction d'entrée sensiblement en parallèle le long de la direction d'entrée au niveau de positions déplacées les unes par rapport aux autres de manière à être reçues respectivement au niveau de la première partie et de la deuxième partie de la structure optique de diffraction de sortie,
dans lequel il y a une ligne de division (13) entre les première et deuxième parties (12, 14) de la structure optique de diffraction de sortie,
dans lequel la première pupille a un premier angle de cône lorsqu'elle est couplée vers la structure optique de diffraction de sortie par la structure optique de diffraction d'entrée, dans lequel l'angle de cône s'étend uniquement dans la première partie et ne coupe pas la ligne de division,
et dans lequel la deuxième pupille a un deuxième angle de cône lorsqu'elle est couplée vers la structure optique de diffraction de sortie par la structure optique de diffraction d'entrée, dans lequel le deuxième angle de cône s'étend uniquement dans la deuxième partie et ne coupe pas la ligne de division.
